# EUROPEAN PATENT APPLICATION

(11) **EP 1 283 513 A1**
(43) Date of publication of application: **12.02.2003**
(21) Application number: 01935926.4
(22) Date of filing: 20.04.2001
(51) Int. Cl.: G09F 19/12

(54) **PLANO-RECIPROCATING ELECTRONIC LUMINESCENT DISPLAY DEVICE**

(30) Priority: 18.05.2000 CN 00224833; 28.11.2000 CN 00251944
(71) Applicant: Lin, Ching-sui, sanshia Cheng Taipei Hsien (CN)
(72) Inventor: Lin, Ching-sui, sanshia Cheng Taipei Hsien (CN)
(74) Representative: Joly, Jean-Jacques
(86) International application number: CN0100567
(87) International publication number: WO01093233

(57) **Abstract**

The present invention discloses a planar oscillating electronic illuminating screen comprising one or multi rows of illuminators (1) distributed evenly or unevenly on an oscillating unit (2) tripping to-and-fro on the plane quickly. The illuminators (1) light up or go out at certain times to display texts or images on the plane on the principle of persistence of vision. The main feature of the present invention lies in that it can utilize fewer illuminators to display tests and images normally and clearly, which significantly decreases the cost of the screen, shortens the time of manufacture and reduces the failure ratio of illuminators, as well as enhances the uniformity of frame brightness. The present invention is of great economic value.

## Description

### FIELD OF THE INVENTION

The present invention relates generally to an illuminating screen, and more particularly to a planar oscillating electronic illuminating screen on which a rod with illuminators oscillates to-and-fro to display texts or images on the principle of persistence of vision.

### BACKGROUND OF THE INVENTION

A conventional planar electronic screen comprises an array of illuminators; therefore the number of illuminators required is usually vast. And the illuminators may fail easily, degrading the quality of images displayed. For example a title panel of 48 X 160 points needs 48 * 160 = 7680 illuminators. Such a great many of illuminators increase not only the cost but also the possibility of failure.

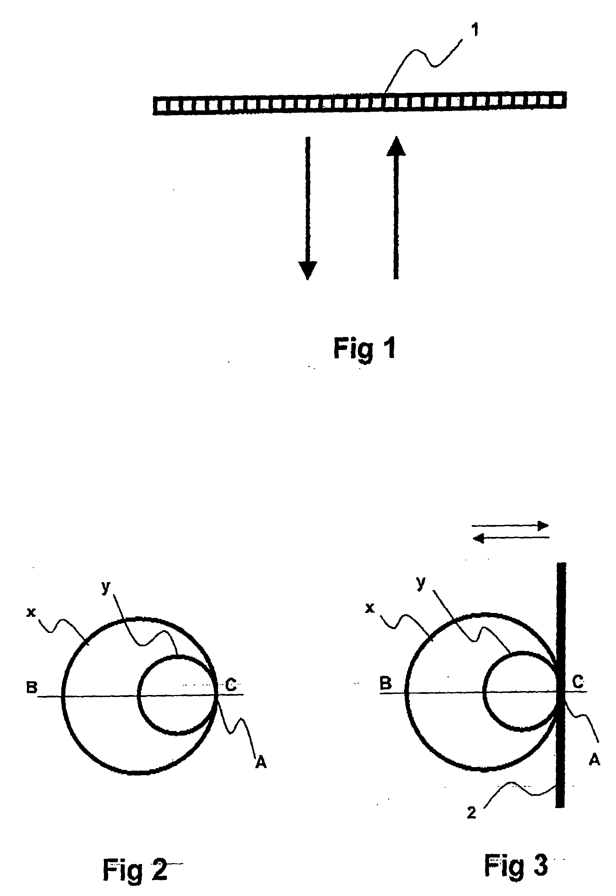

The main purpose of the present invention is to provide a planar oscillating electronic screen, which decreases the amount of illuminators mentioned in above example to 160. As shown in Fig.1, the present invention has a rod with illuminators 1 positioned horizontally on it. A circuit can control those illuminators 1 to light up or go out at certain times when the rod vertically runs to-and-fro on the screen very quickly. The oscillating speed of the rod shall be fast enough to make viewers feel that texts or images are being displayed on the screen. That is to say, on the principle of persistence of vision, the oscillating unit can show texts and images.

### SUMMARY OF THE INVENTION

In order to attain the above purpose, in the present invention, the rod shall oscillate very quickly on the screen. Please see Fig.2, the diameter of circle (X) is 2 times of that of circle (Y). Thus when the circle (Y) runs along the circumference of circle (X) clockwise, point A on circle (Y) will run to-and-fro along line B-C. If the oscillating unit 2 is fixed at point A, as shown in Fig.3, whenever the circle (Y) runs along the circumference of circle (X) clockwise for a loop, the oscillating unit 2 will run for a loop counterclockwise. We designed point A to rotate clockwise relatively to circle (Y). When circle (Y) runs for a loop clockwise, point A will rotate clockwise for a loop relatively to circle (Y). Circle (Y) rotates continuously and the oscillating unit 2 will run to-and-fro along line B-C. Moreover, the oscillating unit 2 faces in the same direction all the time. If illuminators 1 are fixed on the oscillating unit 2 and light up or go out at certain times, texts or images can be displayed.

The structure and function of the present invention will be more readily understood from the following derailed description with the illustrations and embodiments.

### BRIEF DESCRIPTION OF THE DRAWINGS

Fig. 1 is an illustration of the oscillating unit with illuminators running to-and-fro on the plane.
Fig.2 is a schematic diagram of the oscillation of illuminators.
Fig.3 is another schematic diagram of the oscillation of illuminators.
Fig.4 is a 3D view of a preferred embodiment of the present invention.
Fig.5 is a side view of a preferred embodiment of the present invention.
Fig.6 is a sketch map of the effect generated by the oscillation of illuminators.
Fig.7 is a sketch map of the driving unit (toothed belt) used in a preferred embodiment of the present invention.
Fig.8 is a sketch map of the driving unit (gear) used in a preferred embodiment of the present invention.
Fig.9 is a side view of a preferred embodiment of the present invention.
Fig.10 is a sketch map of the light chopper and sensor holes used in a preferred embodiment of the present invention.
Fig.11 is a sketch map of wiring of a preferred embodiment of the present invention.
Fig.12 is a sketch map of the induction generator unit of a preferred embodiment of the present invention.
Fig.13 is an enlarged map of the induction generator unit of a preferred embodiment of the present invention.
   - 1: Illuminator
   - 2: Oscillating Unit
   - 3: Rotating Shaft
   - 4: Rotating Rod
   - 5: Rotating Shaft
   - 6: Counterweight
   - 7: Rotating Rod
   - 8: Counterweight
   - 9: Bearing
   - 10: Belt Gear
   - 11: Toothed Belt
   - 12: Belt Gear
   - 13: Toothed Belt
   - 14: Bearing
   - 15: Belt Gear
   - 16: Belt Gear
   - 17: Bearing
   - 18: Rotating Shaft
   - 19: Frame
   - 20: Motor
   - 21: Sensor Hole
   - 22: Light Chopper
   - 23: Driving Gear
   - 24: Driving Gear
   - 25: Seat
   - 26: Spiral Steel Lead
   - X: Circle
   - Y: Circle

### DETAILED DESCRIPTION OF THE PREFERRED EMBODIMENT

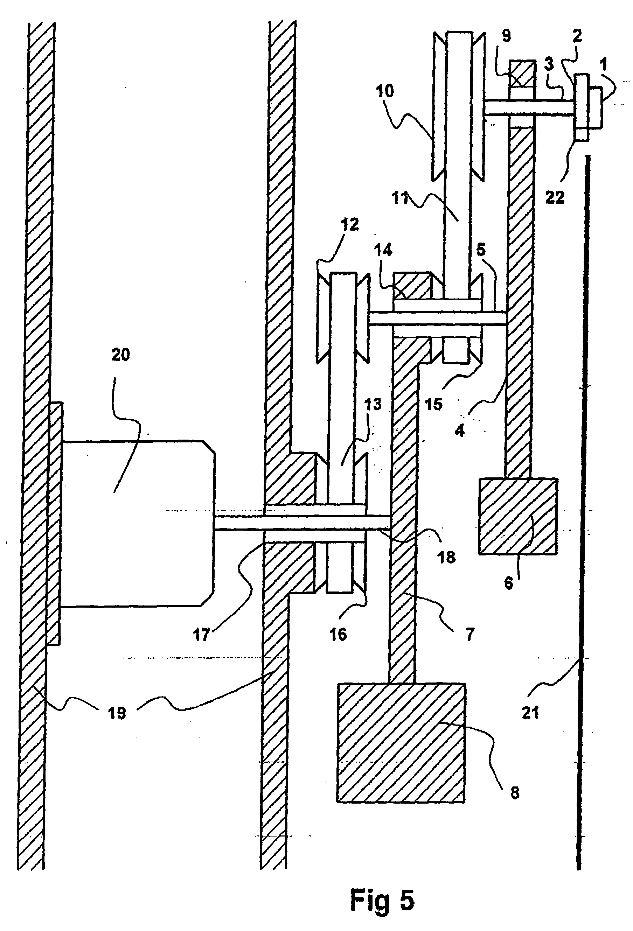

Fig.5 shows the structure of the present invention. The belt gear 16 is fixed on the frame 19, and the belt gear 15 is coupled with the rotating rod 7. The belt gear 15 is static relatively to the rotating rod 7. The gear ratio between belt gear 16 and belt gear 12 is 2:1. And the gear ratio between belt gear 10 and belt gear 15 is also 2:1.

The rotating shaft 5 in Fig.5 is equivalent to the center of above cycle (Y) in Fig.3; the rotating shaft 3 is equivalent to the point A on above circle (Y); while the oscillating unit 2 is equivalent to above rod fixed at point A. When the motor 20 rotates, it drives the rotating shaft 18, which in turn drives the rotating rod 7 to rotate. The belt gear 12 rotates under the driving of the toothed belt 13, and it drives the rotating shaft 5 and the rotating rod 4. At the same time, the belt gear 10 rotates under the driving of the toothed belt 11, and it drives the rotating shaft 3 and the oscillating unit 2. The rotating rod 4 runs along the circumference of the circle formed by the rotating shaft ( 5, which is equivalent to the rotation of above circle (Y) along the circumference of circle (X). The belt gear 10 and the belt gear 15 rotate under the driving of the toothed belt 11, and it drives the oscillating unit 2 via the rotating shaft 3 to rotate against the rotating rod 4, which is equivalent to the rotation of point A on circle (Y) in Fig.3.

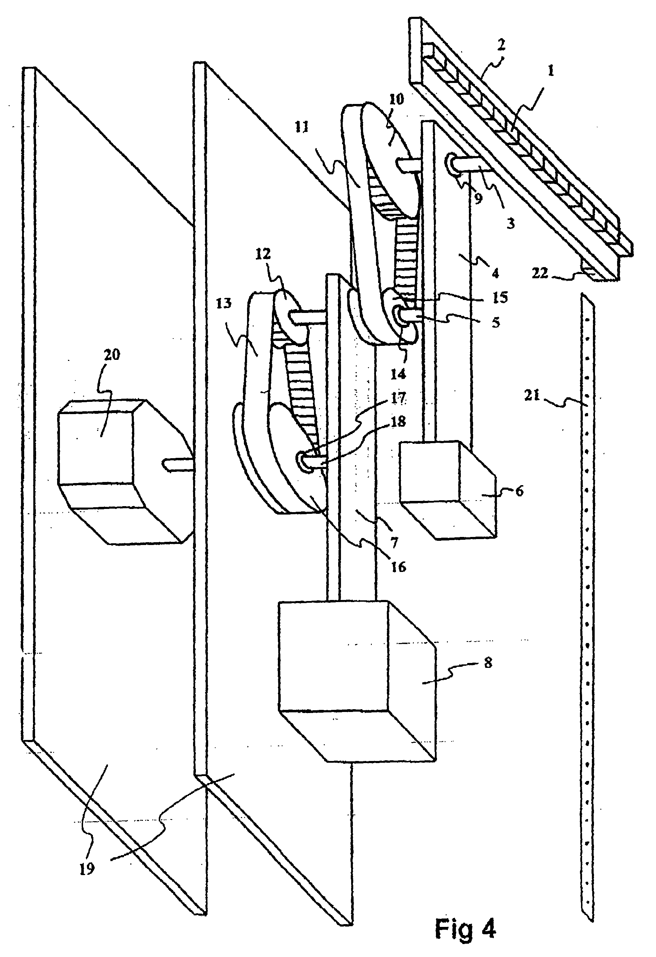

Please see Fig.4. When the motor 20 rotates clockwise, the rotating rod 7 also rotates clockwise. The rotating rod 4 runs clockwise, however, it rotates counterclockwise to drive the rotating shaft 3 and the oscillating unit 2 to rotate relatively to the rotating rod 4 clockwise.

The distance between the rotating shaft 18 and the rotating shaft 5 is equal to that between the rotating shaft 5 and the rotating shaft 3. Thus the trip of the rotating shaft 3 is a line when the motor 20 rotates, which is equivalent the to-and-fro trip of point A along line B-C in Fig.3.

As shown in Fig.4, due to the driving relation among the rotating shaft 3, the belt gear 10, the toothed belt 11, and the belt gear 15, the oscillating unit 2 runs to-and-fro vertically, facing in the same direction all the time, as shown in Fig.1. The counterweight 6 and the counterweight 8 are designed to ensure the balance of the device in fast rotation.

If the motor 20 rotates counterclockwise, the rotating rod 7 will also rotate counterclockwise, and the rotating rod 4 will run counterclockwise, however, the rotating rod 4 will rotate clockwise. The rotating shaft 3 will run to-and-fro along a line, and the oscillating unit 2 will run to-and-fro along the line B-C on the plane as shown in Fig.1.

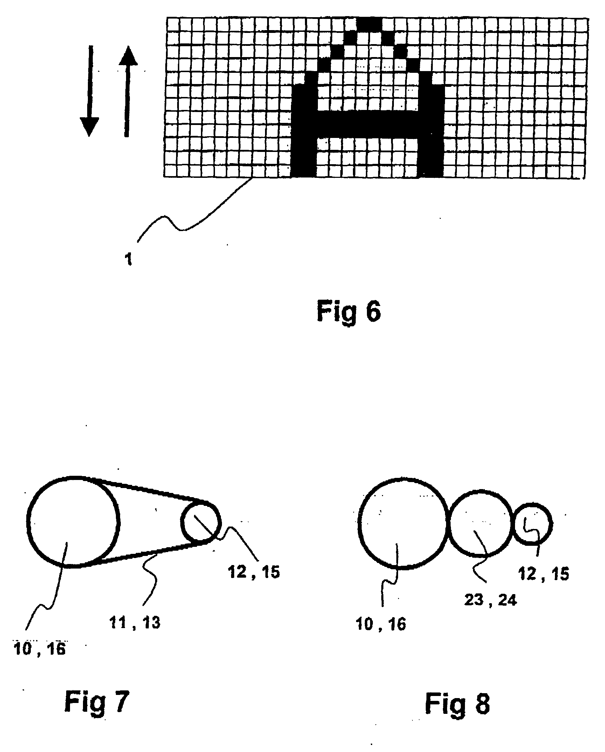

Please see Fig.4. When the oscillating unit 2 runs to-and-fro, its position can be detected by the electrical control circuit with the lighter chopper 22 via the sensor holes 21. Then, the circuit can power on or power off certain illuminators 1. The oscillating unit 2 trips 12 times/second, i.e., it scans the plane 24 times per second. Therefore, texts and images can be represented on the principle of persistence of vision, as shown in Fig.6.

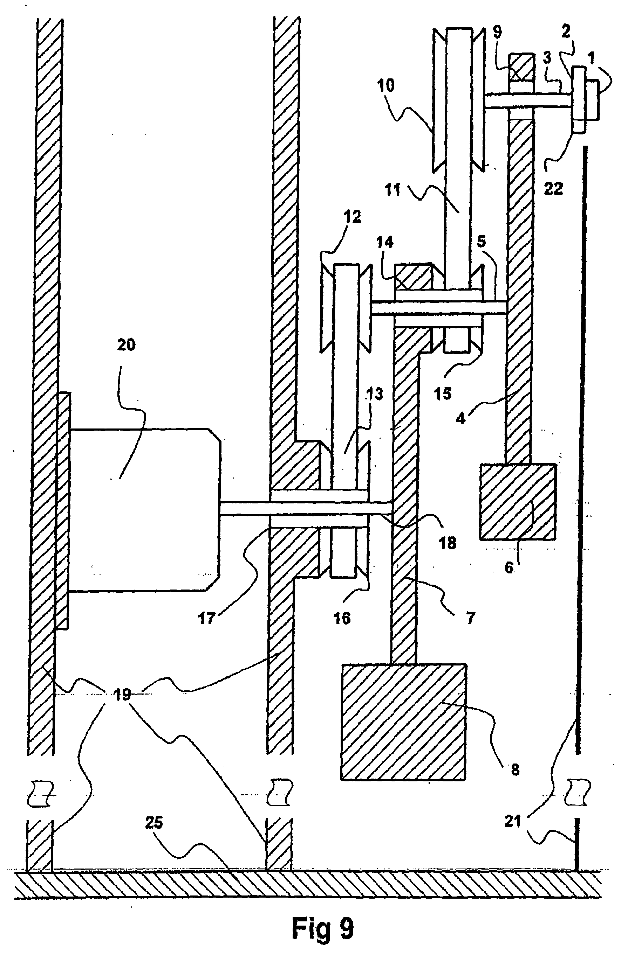

The sensor holes 21 and the fixing frame 19 in Fig.4 and Fig.5 are mounted on the seat 25, as shown in Fig.9.

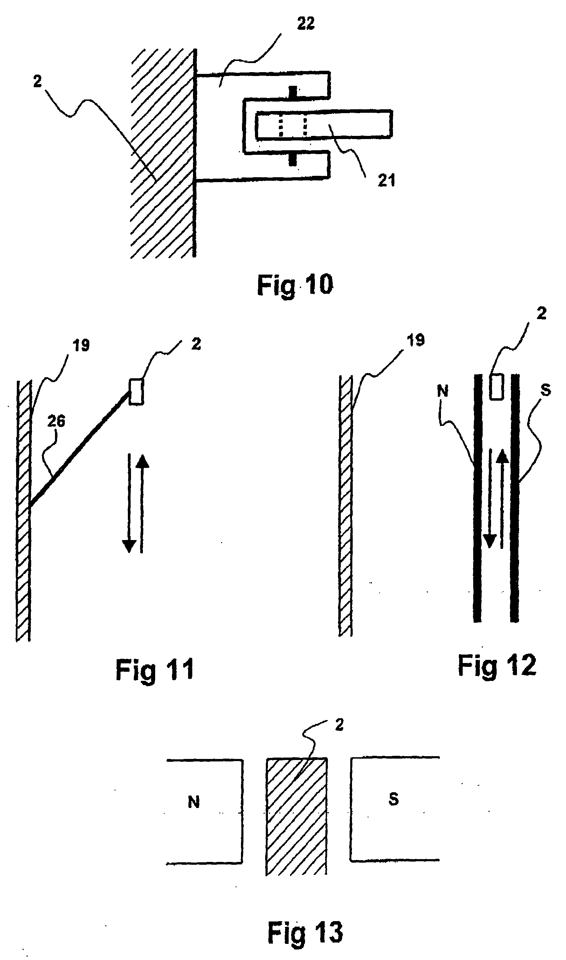

The sensor holes 21 are many arrayed holes, which are designed to let through the infrared ray radiated from the light chopper 22 as the dashed part shown in Fig.10. When the light chopper 22 scans across the sensor holes 21 to-and-fro, some infrared ray will pass through the holes while other infrared ray be shielded by the shaded holes against which the light chopper 22 is facing. In this way, the control circuit can detect the position of the oscillating unit 2 with the light chopper 22.

To display texts and images with the illuminators 1, the illuminator-driving circuit, the power supply unit, and the signal-processing circuit shall be provided.
1.The illuminator-driving circuit is installed on the oscillating unit 2 to drive the illuminators 1.
2.Three approaches are available for the power supply unit:
   (1) A rechargeable battery installed on the oscillating unit 2 to supply power to the circuit and the illuminators 1. This approach is suitable for small-size screens and can be used in occasional cases.
   (2) An induction generator. As shown in Fig.12, there are an N pole and an S pole on the trip path of the left end and the right end of the oscillating unit 2, respectively, and there is a inductance coil in the corresponding position of the oscillating unit 2. When the oscillating unit 2 runs to-and-fro, there will be current generated in the inductance coil. After rectification and voltage transformation, the electric power can serve the circuit and illuminators 1. This approach is suitable for long-term operation of such screens. Fig. 13 displays a sketch map of the induction generator unit.
   (3) Wired power supply. As shown in Fig.11, the spiral steel lead 26 is connected to the oscillating unit 2 on one end and is fixed on the frame 19 on the other end, at which is the half way of the round-trip. Similarly, another spiral steel lead is connected to the other end of the oscillating unit 2 and the other end of the frame 19. Those two leads can be used to supply positive and negative electricity to the circuit and illuminators 1 on the oscillating unit 2. However, The two leads shall be away from the moving path of the rotating rod 4 and rotating rod 7. This approach is much cheaper.
3.The signal-processing unit is installed on the oscillating unit 2, and it can be connected to the main control circuit on the seat 25 through a wireless interface, such as RF signal, infrared ray signal, or the latest Blue Teeth technology. Furthermore, the connection may also be implemented with a lead, as described in (3).

The spiral steel lead shall comprise multi-strand thin steel wire, and it shall look like a spring in exterior appearance to be elastic and tough enough to meet the requirement for fast oscillation. All the approaches are applied according to the requirements.

From above description we can see that the present invention can represent clear and integral images and texts with fewer illuminators through oscillation of a rod, which can significantly decrease the cost and the failure ratio of illuminators, as well as enhance the uniformity of frame brightness. The present invention is of great economic value and is of novelty and creativity. Accordingly, the invention meets all requirements for a new patent. Thus the inventor applies for a new patent with it.

## Claims

1. A planar oscillating electronic illuminating screen comprising: one or multi rows of illuminators (1) distributed evenly or unevenly on an oscillating unit (2) which causes said illuminators (1) to trip to-and-fro on the plane quickly in the mode of mechanical moving and controls said illuminators (1) to light up or go out in appropriate position to display texts or images on the principle of persistence of vision; said oscillating unit (2) is fixed at a rotating shaft (3), which is fixed at a belt gear (10) on the other end; the rotating shaft (3) is coupled with a bearing (9) between the oscillating unit (2) and a belt gear (10); the bearing (9) is fixed on a rotating rod (4) on one end and has a counterweight (6) on the other end; said rotating rod (4) is fixed on a rotating shaft (5), which is fixed on a belt gear (12) on the other end; said rotating shaft (5) is coupled with a bearing (14) between said rotating rod (4) and said belt gear (12); said bearing (14) is fixed on one end of a belt gear (15) and a rotating rod (7); said rotating rod (7) has a counterweight (8) on the other end and said rotating rod (7) is fixed on a rotating shaft (18), which has a motor (20) on the other end; said motor 20 functions for direct or indirect drive; the rotating shaft (18) is coupled with a bearing (17) between said rotating rod (7) and said motor (20); said bearing (17) is placed in a belt gear (16) and a frame (19);
Wherein said belt gear (10) and said belt gear (15) are driven with a toothed belt (11); said belt gear (12) and said belt gear (16) are driven with another toothed belt (13); said belt gear (15) is fixed on said rotating rod (7); while said belt gear (16) is fixed on said frame (19); there is a light chopper (22) at an appropriate position on said oscillating unit (2) and is a row of sensor holes (21) on the to-and-fro trip of said light chopper (22).

2. The planar oscillating electronic illuminating screen as claim 1, wherein the forms of said oscillating unit (2), said rotating rod (4) and said rotating rod (7) are unformed.

3. The planar oscillating electronic illuminating screen as claim 1, wherein the driving relation among said belt gear (16), (10), said belt gear (12), (15), and said toothed belt (13), (11) can also be implemented through combination of machines and gears; the effect is to cause said oscillating unit (2) to run to-and-fro.

4. The planar oscillating electronic illuminating screen as claim 1, wherein said counterweight (6) and (8) can be one piece or combination of multi pieces respectively; the configuration depends on the moving requirements.

5. The planar oscillating electronic illuminating screen as claim 1, wherein one or more mechanical moving units can be used in parallel to synchronously drive said oscillating unit (2), in order to implement wider screens.

6. The planar oscillating electronic illuminating screen as claim 1, wherein said illuminators (1) can be multicolored or in base colors (R, G, B) to represent color images or texts.
